# EUROPEAN PATENT APPLICATION

(11) **EP 3 434 105 A1**
(43) Date of publication of application: **30.01.2019**
(21) Application number: 17250008.4
(22) Date of filing: 24.07.2017
(51) Int. Cl.: A21B 5/02, A47J 37/06

(54) **WAFFLE MAKERS**

(71) Applicant: JM Posner Ltd, Watford Hertfordshire WD24 4YY (GB)
(72) Inventor: The designation of the inventor has not yet been filed
(74) Representative: Whitaker, Iain Mark

(57) **Abstract**

This invention relates to apparatus for making waffles or other batter-based cooked moulded food products, the apparatus comprising a support frame (8) supporting a cooking chamber (3) defined by a pair of co-operating platens (4,5) comprising an upper platen (4) and a lower platen (5) at least one of which is heated in use to cook the batter, the frame carrying a mechanism by which each one of the pair of platens is selectively driven to move toward or away from the other of the platens. The apparatus is automated to produce the cooked food product rapidly. A controller controls the process of making of the food product from opening of the cooking chamber, to dispensing of a required dose/ volume of batter from a source of supply into the cooking chamber, closing of the chamber, cooking of the batter in the chamber for the required time, opening of the chamber and delivery of the cooked food product.

## Description

### Field of the Invention

The present invention concerns apparatus for making waffles, pancakes, galettes, crepes, doughnuts, or other cooked moulded batter-based food products.

### Background to the Invention

Waffle and pancake makers exist in a number of different forms. They can be as simple as an open-topped frying pan or hot plate, but the commonest dedicated devices for mass production, as used in the kitchens of restaurants and other catering facilities, have a pair of facing platens each having a defined shape, normally a circular shape with a circumferential wall, often for waffles with ribs to define the waffle grid-shape patterning, one or both of which platens are heated to cook the batter. The platens sandwich the batter/ flour paste to be cooked between them so that they can both rapidly cook and uniformly mould/shape the end product.

Many commercial waffle makers are designed as portable units and a substantial number have a support frame that acts as a cradle in which the paired platens can be rotated on a spindle to more evenly spread and cook the batter, such as in US Design patent US D465965. The upper and lower platens are generally hinged together to be manually opened apart and closed together and are clamped sealed shut together once the dough has been inserted between them for the cooking to take place. After rotating and cooking, the platens are brought to the horizontal position and then unclamped and the upper platen is manually lifted to expose the cooked product in the lower platen which can then be pried free with a spatula for serving. Such waffle makers are relatively efficient but nevertheless not good enough in productivity rates for the more demanding high turnover food catering establishments/ fast food outlets.

There remains a need for a waffle maker system or system for cooking like food products that can be used quickly and easily with minimal training and supervision and which enables high productivity of the food products.

### Summary of the Invention

According to a first aspect of the present invention there is provided an automated apparatus for making waffles or other batter-based cooked moulded food products, the apparatus comprising a support frame supporting a cooking chamber defined by a pair of co-operating platens comprising a first (eg upper) platen and a second (eg lower) platen at least one of which is heated in use to cook the batter, the frame carrying a mechanism by which each one of the pair of platens is selectively driven to move toward or away from the other of the platens. The pair of co-operating platens are configured as a pair of jaws that pivot relative to each other, the first platen being carried by a first lever arm and the second platen being carried by a second lever arm whereby the first platen may be driven to be moved away from the second platen and the second platen may be driven to be moved away from the first platen. The first platen may thus be raised away from the second platen when the latter is substantially horizontal to permit filling of the second platter with batter for cooking and following cooking the second platen may be driven to be lowered away from the first platen to permit the cooked product to be dropped/ ejected.

The co-operating platens suitably each have a rim around their perimeter to hold in the batter when the platens are closed together. One or both platens is preferably provided with ribs and/or protrusions and recesses for moulding the shape of the food product.

The pair of co-operating platens are configured as a pair of jaws, the first/ upper platen being carried by a first (eg upper) lever arm and the second/ lower platen being carried by a second/ lower lever arm. Preferably each lever arm has a proximal end that mounts the lever arm to the frame. Preferably the proximal end has a driven gear thereon that is driven to tilt the lever arm and thereby raise or lower the platen. Preferably each lever arm proximal end is pivotally held on a support arm that projects from the support structure.

Preferably the mechanism is a gear mechanism that comprises the respective driven gear of each of said upper and lower lever arms and a drive gear therebetween.

Particularly preferably the pair of co-operating platens are both selectively driven by the gear mechanism whereby one of the platens opens while the other remains static. Preferably the drive gear is powered by a stepper motor. Preferably the drive gear is driven in alternate directions in use.

The apparatus particularly preferably further comprises an agitator to flick the lower platen as the lower platen is lowered after cooking to knock the cooked food product from the lower platen. The agitator preferably comprises a spring that supports the lower platen and which interacts with a protrusion when the lower platen is being lowered.

Preferably the apparatus further comprises a delivery chute that is below, and preferably coupled to, the lower platen. Preferably the delivery chute is articulated to the lower platen whereby as the lower platen is lowered the delivery chute is tilted down towards a substantially more horizontal state to initially receive the food product as it falls from the lower platen and as the platen is subsequently raised up again the delivery chute is tilted back towards a substantially more vertical/more steeply vertically inclined state to serve as a slide down which the food product slides into a further receptacle/ serving receptacle, such as for example into a dish or an open fast food container.

Preferably the apparatus further comprises a batter dispenser that is mounted above the lower platen and which selectively dispenses a portion of batter into the lower platen for cooking. Preferably the batter dispenser has an outlet that swivels and or slides into a first position over the lower platen for dispensing batter into the lower platen when required.

Preferably the apparatus has two or more cooking bays each bay comprising a cooking chamber of a pair of co-operating platens to cook a said food product and the apparatus has the batter dispenser having an outlet that swivels and or slides into a first position for dispensing batter into the lower platen of a first bay and when required moves to a position for dispensing batter into the lower platen of another bay.

Particularly preferably the apparatus has or is operatively linked to a micro-processor/ controller programmed to control the sequence and timing of operation of the mechanism to selectively drive the at least one of the pair of platens to move toward or away from the other of the platens. Preferably the controller also controls the operation of the batter dispenser, where present.

The controller is preferably programmed to control the whole process of making of the food product from opening of the cooking chamber, to dispensing of a required dose/ volume of batter from a source of supply into the cooking chamber, closing of the chamber, cooking of the batter in the chamber for the required time, opening of the chamber and delivery of the cooked food product. The automation is such that even untrained or unskilled staff of a fast food restaurant may use the system to provide the cooked food products to customers in high volumes and continuously. All that a supervisor needs to do is replenish or ensure continuous supply of fresh batter and wash the key parts of apparatus at suitable intervals.

The precision operation of the system avoids burning and residues and thereby substantially avoids need for extensive cleaning of the cooking chamber/ platens. Nevertheless, for ease of cleaning of the platens they may be made readily demountable from the frame

Practical cooking throughput times/ cycle times of as little as about 2 minutes each cooking chamber are repeatedly and reliably achieved in continuous use. With multiple cooking chamber/ bays fed from a common source of batter the output can be multiple waffles per minute and meets and exceeds the needs of most caterers.

In further improvements preferably the pair of co-operating platens are mounted to the support frame by a motor-driven spindle/ drive shaft, that preferably is oriented substantially horizontally, for rotating the cooking chamber during cooking. Suitably the pair of co-operating platens are at the end of a support arm that is integrally formed or assembled with, or otherwise coupled to be driven to rotate with, the motor-driven spindle/ drive shaft. A latching/ locking means is preferably provided to latch/ releasably lock the support arm, and hence the cooking chamber, at a substantially level/ horizontal plane position suitable for filling the cooking chamber.

The latching/ locking means preferably comprises a resiliently-biassed member, preferably a bearing, such as a ball-bearing, that engages in a recess.

Preferably the apparatus further comprises a pusher that extends through the second platen to forcibly eject cooked product from the platen. Suitably the pusher is a resiliently biassed pusher pin and one end of the pusher pin projects external to the platen so that when it abuts and presses against the support structure or an extension of the support structure it is depressed thereby into the interior of the platen to eject the cooked product.

Preferably one or both platens has at its underside/ external face truncated blind grooves corresponding to ribs of the internal face.

In a further general aspect the present invention provides an apparatus for making waffles or other batter-based cooked moulded food products comprising any novel and inventive feature or combination of features as herein described and illustrated.

### Brief Description of the Drawings

Preferred embodiments of the present invention will now be further described, by way of example only, with reference to the accompanying drawings, in which:
**Figure 1** is a front view of a preferred embodiment of the invention comprising an automated waffle-maker having a pair of cooking bays, each bay having a cooking chamber comprising a pair of upper and lower platens ;
**Figure 2** is a front view of a variant of the waffle maker housed in a lidded casing;
**Figure 3** is a more detailed first fronto-perspective view of one of the two cooking chambers of the apparatus, with the upper platen of the cooking chamber in its fully raised substantially vertical state and the lower platen at its horizontal cooking position to allow batter to be dispensed into the cooking chamber/ onto the cooking surface of the lower platen and with the gear mechanism that moves the platens being exposed to show the integral gear on the end of the lever arm of each platen and the drive gear between them;
**Figure 4** is a perspective view of the cooking chamber from above in its closed/ cooking state and showing the gear mechanism;
**Figure 5** is a second fronto-perspective view, similar to Figure 3 but with the upper platen at its horizontal cooking position and with the lower platen lowered away as after releasing a cooked waffle;
**Figure 6** is a first rear-perspective view similar to Figure 5 but with the lower platen still at its horizontal cooking position and showing in place the delivery chute for delivery of the cooked waffle, the chute being held at its raised position by the raised lower platen;
**Figure 7** is a second rear-perspective view that corresponds to Figure 6 but with the lower platen lowered to its lowermost /waffle ejecting position and showing the delivery chute at its lowermost position;
**Figure 8** is a first side elevation view of the cooking chamber in the closed/ cooking state and showing in place the over-centre tension spring that supports the lower platen in its raised cooking position and which also provides a flick action to the lower platen when it opens;
**Figure 9** is a second side elevation view of the cooking chamber, here part-opened with the lower platen lowering and showing the spring briefly catching on a nut protruding from the lower platen's pivot to flick the lower platen;
**Figure 10** is a third side elevation view of the cooking chamber, here with the lower platen fully lowered and showing the spring having passed beyond the nut after flicking the lower platen;
**Figure 11** is a perspective view similar to Figure 3 with one platen horizontal and the other platen raised, but here the view is of a second preferred embodiment of the apparatus, wherein the jaw comprising the mating platens is rotatably mounted to the rear wall of the cabinet by a spindle so that the cooking chamber can be spun/ rotated about a substantially horizontal axis for improved mixing and cooking ;
**Figure 12** is a perspective view of the Figure 11 embodiment showing the cooking chamber closed and also showing a pusher pin in one of the platens as an alternate or additional means to assist ejection of the waffle/ cooked food product at the end of the cooking phase ;
**Figure 13** is a perspective view of the Figure 11 embodiment showing the cooking chamber in process of being rotated by the motor-driven spindle ;
**Figure 14** is a perspective view of the Figure 11 embodiment showing the cooking chamber having being rotated by the spindle through 180 degrees as compared to Figure 11, so that the pusher pin is on the underside ;
**Figure 15** is a perspective view of the Figure 11 embodiment from the rear and showing the drive motor and gear mechanism for rotating the spindle and cooking chamber ;
**Figure 16** is a vertical sectional view of the Figure 11 embodiment and showing the spindle, drive motor and gear mechanism ;
**Figure 16A** is a blown-up/ detailed view of a ball locking/latching mechanism for holding the cooking chamber in its horizontal/ level position at which it is filled with batter or for releasing the cooked content;
**Figure 17** is a side elevation view of the Figure 11 embodiment in its position for ejecting the cooked content and showing the pusher pin being pressed into the platen as the platen moves back against the supporting rear wall of the cabinet;
**Figure 18** is a fronto-perspective view of the Figure 11 embodiment in its ejection position corresponding to Figure 17 ;
**Figure 19** is a vertical sectional view of the lower platen close to the ejection position corresponding to Figure 17 to show the mounting of the pusher pin extending right through the centre of the platen and with an ejection head of the pusher pin seated in a recess in the centre of the internal part of the platen (the platen here is a sandwich assembly of an internal cooking chamber part and behind that a heating element part that carries the heating element/ resistance heating coil) ;
**Figure 20** is a front view of the internal part/ cooking face of the lower platen through which the pusher pin passes and showing the central recess and aperture for receiving the pusher pin ;
**Figure 21** is a rear view of the internal part of the lower platen and showing the central aperture for receiving the pusher pin and the cross hair grooves that are the underside of the ribs on the cooking face (these grooves are truncated and blind-ended to eliminate heat loss ; and
**Figure 22** is a rear elevation view of the internal part of the lower platen of inferior prior and prototype designs of platen where the underside of the ribs on the cooking face are grooves that are substantially full length radii and openended and which have been found to be unsuitable for the short dwell time fast turnaround cooking cycles of the present invention unlike the Figure 21 platen.

### Description of the Preferred Embodiments

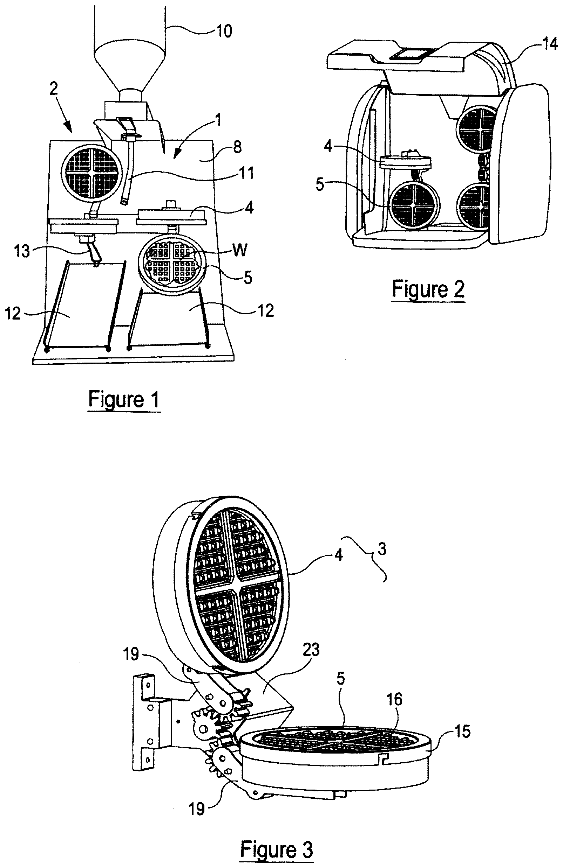

Referring to Figure 1, the first embodiment of illustrated waffle-maker is a high turn-over automated system that has a pair of side by side cooking bays 1, 2 each with a respective cooking chamber 3. Each cooking chamber 3 of the waffle-maker comprises a pair of co-operating upper 4 and lower 5 electric heated platens. The platens 4, 5 are mounted by a horizontal support arm 6 projecting from a bracket 7 bolted/ screwed or otherwise fixed to a vertical wall of a support structure/ frame 8 of the waffle-maker. The platens 4, 5 are mounted to the rear wall 8a of frame 8 such that they can be held horizontal, closed together for cooking and can, respectively, articulate upwardly and downwardly from that horizontal position. The upper platen 4 is able to raise first to open the cooking chamber 3 for filling the lower platen 5 of the cooking chamber 3 with freshly pre-prepared batter and then, after cooking, the lower platen 5 is able to be lowered for releasing the cooked waffle product from the cooking chamber 3.

A batter dispenser 9 is positioned between the bays 1, 2 above the platens 4,5 to store pre-prepared batter for making scores and even hundreds of waffles. The batter dispenser 9 has a tall batter storage container 10 mounted upright to the vertical wall of the support structure/ frame 8 of the waffle-maker to on demand deliver batter down through a funnel and out through a dispensing nozzle/ outlet 11. The dispensing nozzle/ outlet 11 incorporates a length of delivery pipe that is able to swivel to left or right to feed batter onto the open upper face of the horizontally held lower platen 5 in each bay 1, 2. The delivery of the batter may be actively pressurized/ motor pumped and/ or it may be gravity-fed.

The waffle-maker has a micro-processor in its housing that is programmed to operate the batter dispenser's dispensing nozzle/ outlet 11 to move and to control opening of a valve to selectively dispense batter into the cooking chamber 3 of each bay 1, 2 in turn. The microprocessor is also programmed to control the opening and closing of the cooking chambers 3, the cooking parameters and the ejecting/ delivery of the cooked product, enabling the waffle-maker to operate substantially continuously for long periods and multiple cycles producing many waffles without staff supervision or intervention.

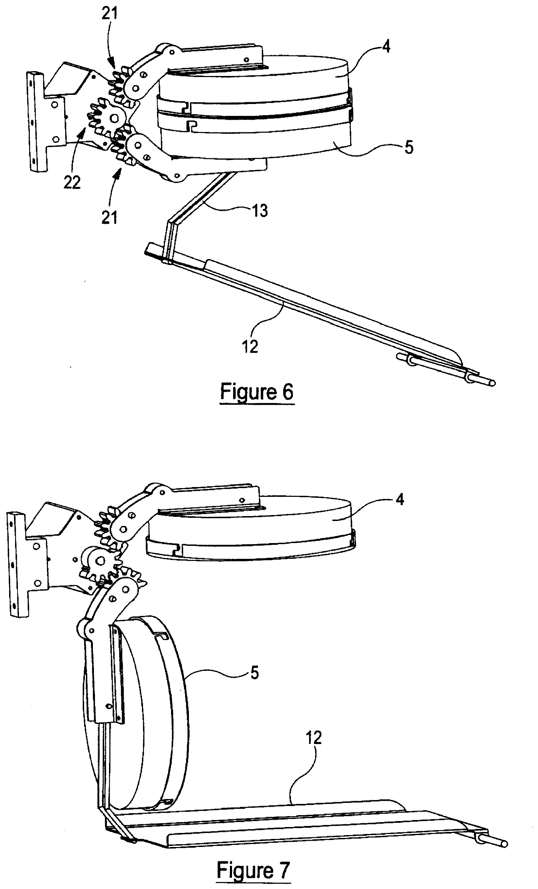

As can be further seen in Figure 1 (and detailed in Figures 6 and 7), the waffle-maker incorporates a respective waffle delivery chute 12 for each of the bays 1, 2 to direct the cooked waffles onto a receptacle such as a dish or fast-food container for serving. The delivery chute 12 is coupled/ articulated by a strap, cable 13 or other articulated linkage to the underside of the lower platen 5 so as to be lowered as the lower platen 5 is lowered, the delivery chute 12 being tilted down towards a substantially more horizontal state to initially receive the waffle W as it falls from the lower platen 5 and as the platen 5 is subsequently raised up again the delivery chute 12 is tilted back towards a substantially more vertical/ more steeply vertically inclined state to serve as a slide down which the waffle W slides into a serving receptacle.

Referring to Figure 2, the waffle-maker as illustrated there incorporates a compact front-opening lidded casing 14 with a rear wall 8a and side walls 8b and hinged lid to house the pair of illustrated cooking bays. Although illustrated with two cooking bays the system may be scaled up to include many more bays and can be deployed as a modular scalable system for maximum flexibility.

Figures 3 to 5 illustrate in greater detail the structures of a cooking bay 1. The upper and lower cooking platens 4, 5 are each of circular cylindrical shape with a raised cylindrical rim 15 to define a recess 16 that is effectively half of the cooking chamber 3. When the upper and lower cooking platens 4, 5 are brought together into the cooking position with their rims 15 contacting and substantially sealing against each other the recess 16 of each platen 4,5 combines with the recess 16 of the other to form the cooking chamber 3. The recess 16 of each platen 4, 5 is divided up into a familiar waffle grid-form arrangement by a cross of ribs and matrix of nodular protrusions. The recess 16 is formed in a low friction, preferably Teflon®-coated, de-mountable cooking plate part 17 of the platen 4, 5 that is readily de-mountable from the rest of the platen 4, 5, if required, for cleaning and/ or maintenance. Notches 18 in the rim of the demountable cooking plate part 17 facilitate its de-mounting from the rest of the platen 4, 5.

Each of the upper and lower cooking platens 4, 5 is mounted to the vertical wall of the support structure/ frame 8 by the horizontal support arm 6 of the bracket 7. The upper platen 4 has on its rear/ upper face an integral lever arm 19 that projects radially outwardly and curves downwardly to mount to the support arm 6. The end of the integral lever arm 19 is pivotally mounted by pivot 20 to the support arm 6 to allow the arm 19 and upper platen 4 to move up and down as an upper jaw of the cooking bay 1. The pivotally-mounted end of the integral lever arm 19 incorporates an integral gear 21 which selectively meshes with and is driven by a motorized drive gear 22 on the support arm 6. An electric stepper motor 23 is housed on the support arm 6 to drive the drive gear 6 in response to control signals from the micro-processor.

The lower platen 5 has an integral lever arm 19 on its rear (lower) face that projects radially outwardly and curves upwardly to mount to the support arm 6. This too is pivotally mounted by a respective pivot 20 to the support arm 6 and also has an integral gear 21 which selectively meshes with and is driven by the motorized drive gear 22. The configuration of the teeth on the drive gear 22 and the driven gears 21 of the platen lever arms 6 is such that the driven gears 21 of the upper 4 and lower platen 5 are driven independently of each other so that the upper platen 4 can be raised while the lower platen 5 is held horizontal for filling with batter. Similarly, once cooking is substantially completed the lower platen 5 can be lowered and re-raised while the upper platen 4 remains in the horizontal position.

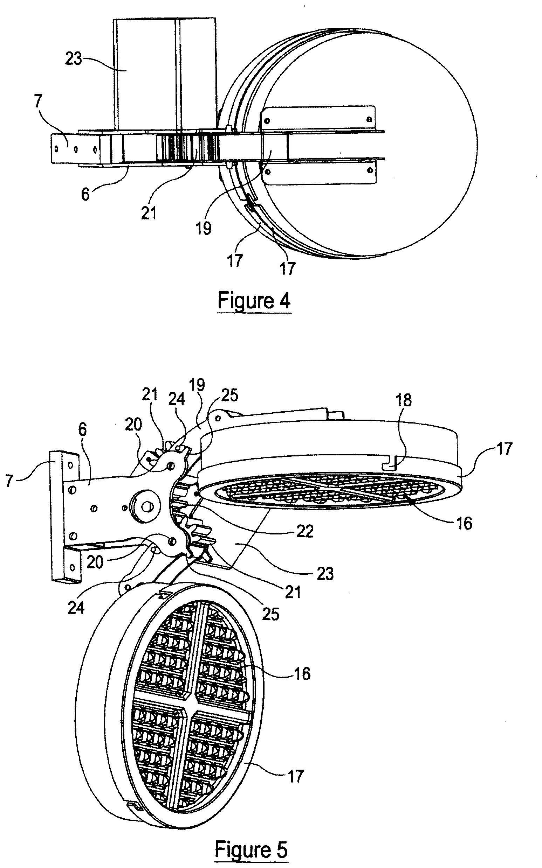

Referring to Figure 5, each lever arm 6 has a detent pin 24 on it that catches against a respective one of a pair of detent shoulders 25 on the support arm 6 to act as a definitive end stop for the closing together movement of the platens 4, 5 and with the upper detent shoulder 25 supporting the upper platen 4.

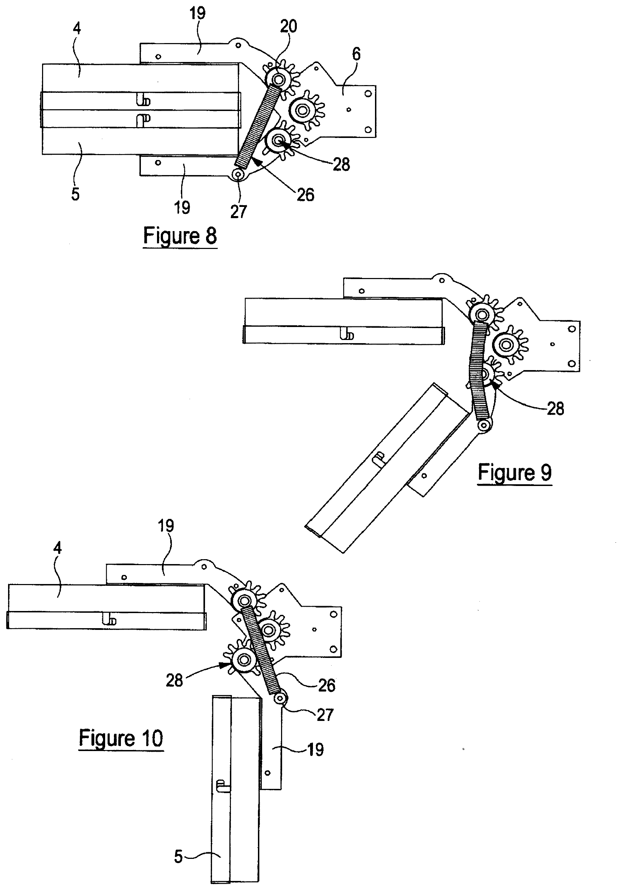

Referring to Figures 8 to 10, these show that the lower platen 5 is supported up in the horizontal cooking position by action of an over-centre tension spring 26. This tension spring 26 is mounted at one end to the pivot 20 of the upper platen 4 and at the other end to a pin 27 on the lever arm 19 of the lower platen 5. When control signals are sent to the motor 23 for driving drive gear 22 to open the cooking chamber 3, the lower platen 5 is driven to tilt progressively more downwardly. Partway through the downwards movement, as illustrated in Figure 9, the tension spring 26 brushes past a nut 28 that protrudes slightly from the lower platen 5 pivot 20. Thus as the spring 26 passes over the centre of the pivot 20 this causes the spring 26 to bounce and in turn causes the lower platen 5 to bounce. The mesh of the teeth of the gears 21, 22 is designed to incorporate sufficient meshing clearance/ free play between them to allow for the bouncing movement. The bouncing movement effectively flicks the platen 6 in a way that we have found to be a good way of reliably dislodging the cooked waffle W from the lower platen 5 so that the waffle W is able to drop freely down onto the underlying delivery chute 12. This release mechanism is simple, efficient and effective and requires no further energy and it is complemented neatly by the articulated delivery chute that catches the falling waffle W and directs it towards a serving receptacle. The delivery chute's top end tilting down and then up movement below the lower platen 5 is driven simply by the movement of the lower platen 5 and it provides a way of accommodating the delivery chute in a compact volume and providing a moving tipping action to the chute 12.

In a typical waffle-making cycle using the apparatus illustrated in the drawings the waffle can be made and delivered to plate in less than 2 minutes. For one waffle a 100g dose of freshly prepared batter from the storage container 10 of batter dispenser 9 is dispensed into the cooking recess 16 of the lower platen 5. The upper platen 4 is lowered down to meet the lower platen 5 in the horizontal cooking position and the batter is cooked for 1.5 minutes at 180°C. As a measure to minimise time loss in heating to reach the required cooking temperature, the apparatus may maintain the platens close to or at substantially the right temperature for cooking while the platens 4, 5 are open and not just during the cooking time. Extra heat may be supplied while the platens are open. Due to the rapid speed of operation of the automated filling and emptying of the cooking chamber 3 heat loss is nevertheless minimal and the process is sped up significantly by the avoidance of any cooling and re-heating period.

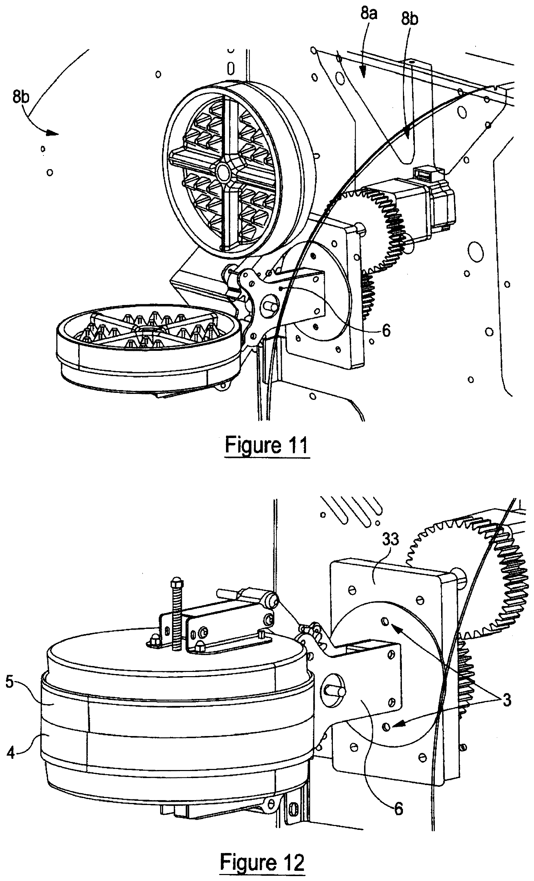

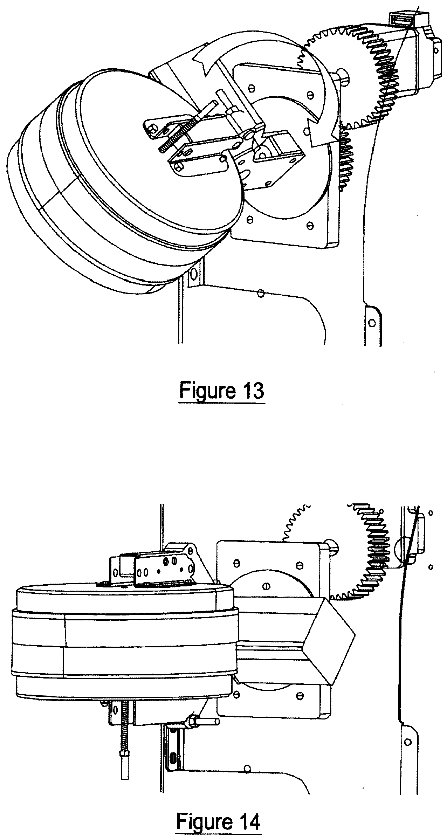

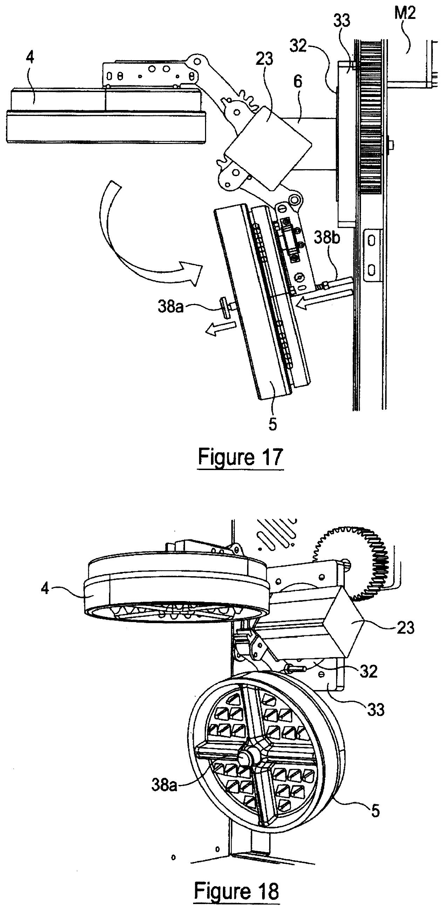

The best operational results have been achieved using the further enhancements and modifications incorporated in the second preferred embodiment of the invention that is illustrated in Figures 11 to 21.

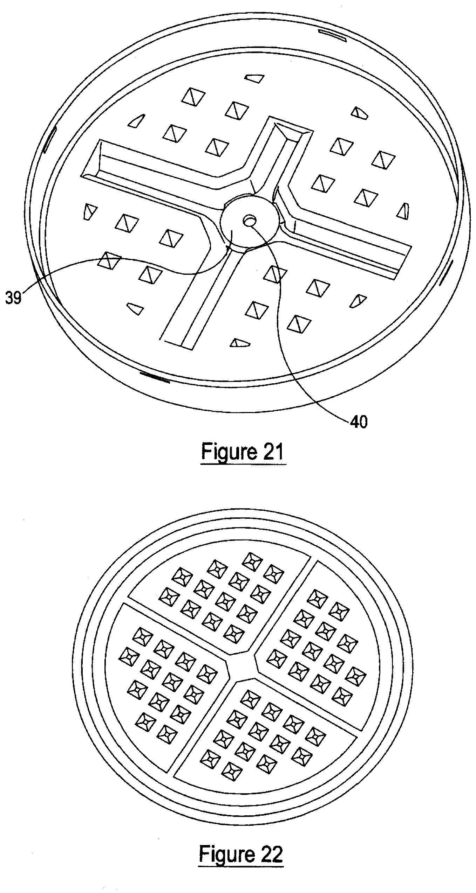

Referring to Figures 11 and 12, the second preferred embodiment incorporates two mechanical system improvements over the first embodiment. Furthermore, referring to Figure 21, it and the first embodiment may also further benefit from a specialized design of the cooking platen that reduces radiant heat losses inherent in conventional cooking platens.

The second preferred embodiment's two mechanical system improvements illustrated in Figures 11 to 19 comprise firstly an adaptation of the mount of the stem/support arm 6 of the platen 4, 5 jaws of the cooking chamber 3 to allow powered rotation of the cooking chamber 3 about a horizontal axis; and the second mechanical system improvement is a pusher device that provides for a more forcible ejection of cooked food products, better ejecting the stickier food products.

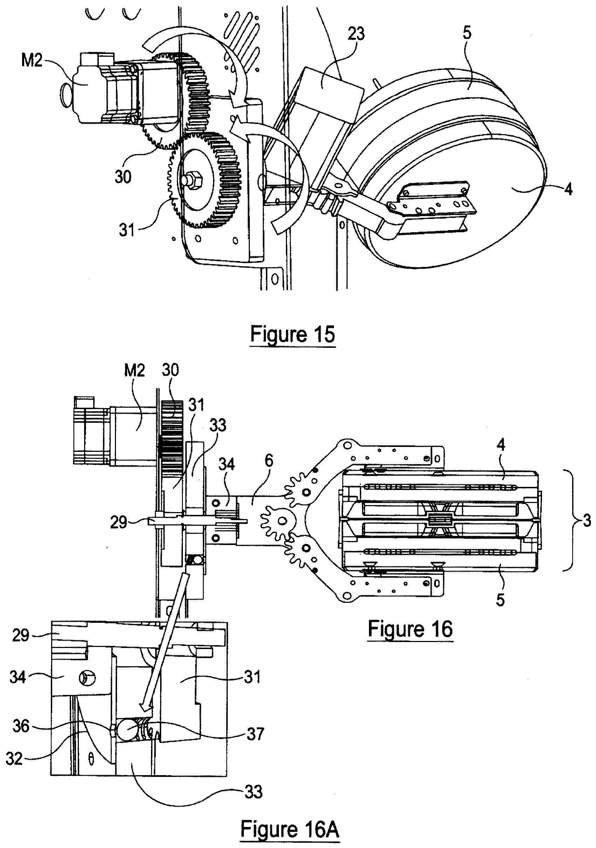

As shown in Figures 11 to 18, the horizontal support arm 6 of the cooking chamber jaws that mounts to the rear wall 8a of the cabinet 14 / support frame 8 of the apparatus is not fixedly mounted by a bracket 7 fixed to the rear wall 8a, unlike in the first embodiment. Instead it is pivotally mounted to the rear wall 8a by a rotating spindle (ie axle/ drive shaft) 29. The rotating spindle 29 projects substantially horizontally forwardly from the upright rear wall 8a and it is driven to rotate by a dive mechanism within/ behind the rear wall 8a that comprises a motor M2 and a drive gear assembly 30, 31. The fixed bracket 7 of the first embodiment is replaced by a circular disc 32 at the mounting end of the support arm 6 and that faces onto a rectangular mounting block 33 on the rear wall 8a. The bottom bolt holes in the support arm 6 are bolted to a block of steel 34 that has the spindle 29 extending into it. The spindle 29 is best seen in Figure 16 and is keyed to the steel block 34 of the support arm 6 to transmit rotation to the support arm 6 and hence to the cooking chamber 3 borne on the support arm 6. The support arm 6 carries not only the cooking chamber 3 but also the activating mechanism / motor and gear assembly for operating the opening and closing of the jaws defined by the co-operating first and second platens.

The circular disc 32 at the mounting end of the support arm 6 has a central aperture 35 through it for the spindle 29 to project through. Furthermore, as shown in Figure 16A the circular disc 32 also has a pair of smaller apertures or recesses 36 in it at opposing polar locations to serve as locking/ latching recesses 36 that co-operate with a spring-loaded ball-bearing 37 that is captive in an aperture on the rectangular mounting block 33 on the rear wall 8a. When the arm 6 rotates to either of its 180 degrees apart positions at which the cooking chamber 3 is oriented in the horizontal plane the locking/ latching recesses 36 serve to detain the arm 6 at that position. Thus, as per Figure 16, when the cooking chamber is horizontal with the cooking platen 5 horizontal and lowermost it is latched in that position by the ball-bearing 37 in recess 36 engagement.

Turning now to the second mechanical system improvements over the first embodiment, the second embodiment as shown in Figures 11 to 19 has a spring-loaded pusher pin/ rod 38 that is mounted in and projecting right through the cooking platen 5 (the second platen/ platen that is lowermost during product ejection). The pusher pin/ rod 38 has a head 38a that nests within a central recess 39 in the internal face of the cooking platen 5 and a shank 38b that extends out through a central aperture 40 through the rear of the platen 5, projecting by a distance such that when the platen 5 tilts back to impact the rear wall 8a it depresses the pusher pin/ rod 38 into the platen 5 so that the head 38a of the pusher pin 38 forcibly ejects any cooked product, eg waffle, from the platen 5. The distance travelled for home i.e. from where the pusher rod 38 is in the vertical position to the eject position is 180 degrees. After rotation the cooking platen 5 containing the pusher rod 38 is opened away from the other platen 4 and the pusher 38 is then depressed by abutment with the wall 8a pushing the waffle out of the platen 5.

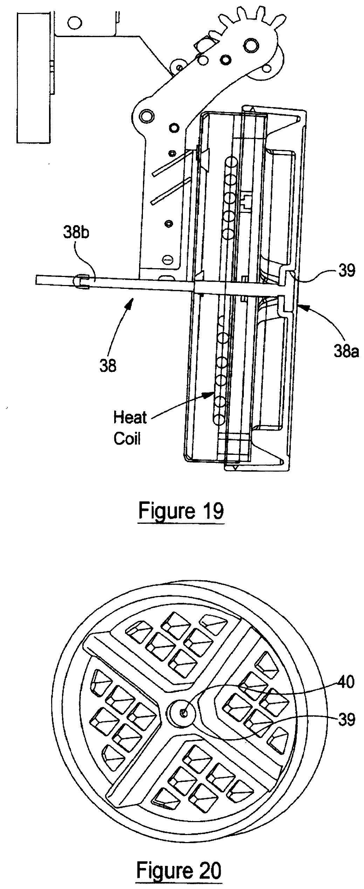

Figure 20 and 21 illustrate the improved design of the cooking platen 5 that reduces and substantially eliminates the radiant heat losses inherent in the prototype and more conventional cooking platens. As compared to the platen design in Figure 22, the improved platen has at its underside/ external face truncated blind grooves corresponding to the cross-hair ribs of the internal face.

In the Figure 22 platen the grooves extend fully across the radius of the platen and merge with a circumferential groove, such having less material and being easier / cheaper to form, but we have found in practice that such arrangement allows some radiant losses of heat and hinders the ability to achieve optimally short cooking time for high turnover.

## Claims

1. An apparatus for making waffles or other batter-based cooked moulded food products, the apparatus comprising a support frame supporting a cooking chamber defined by a pair of co-operating platens comprising a first platen and a second platen at least one of which is heated in use to cook the batter, the frame carrying a mechanism by which each one of the pair of platens is selectively driven to move toward or away from the other of the platens, wherein the pair of co-operating platens are configured as a pair of jaws that pivot relative to each other, the first platen being carried by a first lever arm/ jaw and the second platen being carried by a second lever arm/ jaw whereby the first platen may be driven to be moved away from the second platen and the second platen may be driven to be moved away from the first platen.

2. An apparatus as claimed in claim 1, wherein each lever arm has a proximal end that mounts the lever arm to the frame and wherein the proximal end has a driven gear thereon that is driven to tilt the lever arm and thereby raise or lower the platen.

3. An apparatus as claimed in claim 2, wherein the mechanism is a gear mechanism that comprises the respective driven gear of each of said first and second lever arms and a drive gear therebetween.

4. An apparatus as claimed in claim 3, wherein the pair of co-operating platens are both selectively driven by the gear mechanism whereby one of the platens moves while the other remains static.

5. An apparatus as claimed in any preceding claim, wherein the pair of co-operating platens are mounted to the support frame by a motor-driven spindle/ drive shaft for rotating the cooking chamber during cooking.

6. An apparatus as claimed in claim 5, wherein the pair of co-operating platens are at the end of a support arm that is integrally formed or assembled with, or otherwise coupled to be driven to rotate with, the motor-driven spindle/ drive shaft.

7. An apparatus as claimed in claim 6, wherein the apparatus has a latching/ locking means to latch/ releasably lock the support arm, and hence the cooking chamber, at a substantially level/ horizontal plane position suitable for filling the cooking chamber with batter.

8. An apparatus as claimed in any preceding claim, wherein the apparatus further comprises an agitator that flicks the second platen as the second platen is lowered after cooking to knock the cooked food product from the second platen.

9. An apparatus as claimed in claim 8, wherein the agitator comprises a spring that supports the second platen and which interacts with a protrusion when the second platen is being lowered.

10. An apparatus as claimed in any preceding claim, wherein the apparatus further comprises a delivery chute that is below the second platen to receive the food product from the second platen.

11. An apparatus as claimed in claim 10, wherein the delivery chute is articulated to the second platen whereby as the second platen is lowered the delivery chute is tilted down towards a substantially more horizontal state to initially receive the food product as it falls from the second platen and as the platen is subsequently raised up again the delivery chute is tilted back towards a substantially more vertical/ more steeply vertically inclined state to serve as a slide down which the food product slides towards a receptacle.

12. An apparatus as claimed in any preceding claim, wherein the apparatus further comprises a batter dispenser that is mounted above the second platen and which selectively dispenses a portion of batter into the second platen for cooking.

13. An apparatus as claimed in claim 12, wherein batter dispenser has an outlet that swivels and/ or slides into a first position over the second platen for dispensing batter into the second platen when required.

14. An apparatus as claimed in claim 13, wherein the apparatus has two or more cooking bays each bay comprising a cooking chamber of a pair of co-operating platens to cook a said food product and the batter dispenser outlet swivels and or slides into the first position for dispensing batter into the second platen of a first bay and when required moves to a second position for dispensing batter into the second platen of another bay.

15. An apparatus as claimed in any preceding claim, wherein the apparatus has or is operatively linked to a micro-processor/ controller programmed to control the operation of the mechanism to selectively drive at least one of the pair of platens to move toward or away from the other of the platens.
